# EUROPÄISCHE PATENTSCHRIFT

(11) **EP 3 567 441 B1**
(45) Veröffentlichungstag und Bekanntmachung des Hinweises auf die Patenterteilung: **26.06.2024**
(21) Anmeldenummer: 18171049.2
(22) Anmeldetag: 07.05.2018
(51) Int. Cl.: G05B 19/418, G05B 19/042

(54) **PROZESSLEITSYSTEM MIT EINEM ENGINEERING-, EINEM OPERATOR- UND EINEM ARCHIV-SYSTEM**
PROCESS CONTROL SYSTEM WITH AN ENGINEERING SYSTEM, AN OPERATOR SYSTEM AND AN ARCHIVE SYSTEM
SYSTÈME DE CONDUITE DE PROCESSUS DOTÉ D'UN SYSTÈME D'INGÉNIERIE, D'OPÉRATEUR ET D'ARCHIVAGE

(43) Veröffentlichungstag der Anmeldung: 13.11.2019
(73) Patentinhaber: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(56) Entgegenhaltungen:
- EP-A1- 2 811 349
- EP-A1- 2 942 684
- EP-A1- 3 067 768
- EP-A1- 3 264 208
- EP-A1- 3 285 162
- EP-A1- 3 306 469
- US-A1- 2009 037 872
- US-A1- 2009 125 129

## Beschreibung

Die Erfindung betrifft ein Prozessleitsystem mit einem Engineering-, einem Operator- und einem Archiv-System gemäß dem Oberbegriff des Anspruchs 1.

In der Prozessleittechnik werden gewöhnlich Benutzeraktionen während des Engineerings bzw. im Rahmen der Projektierung der Hard- und Software-Komponenten einer Automatisierungseinrichtung oder eines Prozessleitsystems chronologisch fortlaufend protokolliert. Beispiele für derartige Aktionen sind das Aktivieren/Deaktivieren/Konfigurieren eines Zugriffsschutzes, das Öffnen oder das Schließen von Projekten oder von Bibliotheken, das Laden von Prozessobjekten in ein Zielsystem (Automatisierungsgerät, Operatorsystem, ...) oder die Operationen zum Laden und Kopieren von Bausteinen.

Eine solche Protokollierung von Engineering-Benutzeraktionen - im Folgenden auch als ES-Protokollierung oder ES-Protokoll bezeichnet - wird durch eine geeignete aktivierbare Option einer Software-Komponente eingeleitet, wobei z. B. eine aktivierte Option "ES-Protokoll aktiv" bewirkt, dass auch alle Ladevorgänge von CFC-Plänen (Continuous Function Chart-Plänen) oder CFC-Bausteinen (Continuous Function Chart-Bausteinen und/oder SFC-Plänen (Sequential Function Chart-Plänen) oder SFC-Bausteinen (Sequential Function Chart-Bausteinen) protokolliert werden. Das Protokoll bzw. Änderungsprotokoll, das gewöhnlich Bestandteil eines übergeordneten Protokolls bzw. eines Haupt- oder Anlagenprotokolls ist, kann für eine Auswertung exportiert und/oder auf einer Anzeigeeinheit angezeigt werden. Beispielsweise wird im Rahmen einer Aktion "Laden gesamtes Programm" das ES-Protokoll mit einer Datumskennung versehen, als Datei in einem Archiv-Server archiviert und anschließend das ES-Protokoll aus dem übergeordneten Protokoll gelöscht, wobei die Archivierungsaktion und der verwendete Dateiname (einschließlich Pfad) im Protokoll festgehalten werden.

Ferner werden beispielsweise bei der Aktion "Testmodus ein" alle folgenden Aktionen protokolliert, die zu einer Veränderung (Wertänderung) in der CPU eines Automatisierungsgerätes führen. Als Aktion wird z. B. protokolliert, welcher Wert wie geändert wurde (Adresse, alter Wert, neuer Wert). Darüber hinaus werden gewöhnlich in einem CFC-Plan die Parametrierung von Anschlüssen, das "Forcen" aktivieren/deaktivieren" und die "Force-Wertänderungen" sowie das Ein-/Ausschalten von Ablaufgruppen protokolliert. Auch in einem SFC-Plan werden in der Regel die Parametrierungen von Konstanten in den Schritten, die Parametrierungen von Konstanten in den Transitionen und die Parametrierungen von Konstanten in den Ketten- bzw. Sequenzeigenschaften protokolliert.

Die erläuterten Funktionen bezüglich der Protokollierung (und somit der Überwachung) der Benutzeraktivitäten bzw. der Benutzeraktionen werden gewöhnlich unter dem Begriff "Audit-Trail" zusammengefasst. Dabei unterscheiden sich die Mechanismen zur Verwirklichung der Funktionen im Engineering-System von denen zur Verwirklichung in einem Operator-System oder in einem sonstigen Laufzeitsystem (Runtime-System). Die Audit-Trail-Funktionen im Engineering-Kontext sind getrennt von den Audit-Trail-Funktionen im Runtime-Kontext, wobei ferner auch die Ergebnisse der Protokollierung im Engineering-System und im Operator-System (in der Runtime) getrennt voneinander archiviert und ausgewertet werden. Dies bedeutet, dass die Zusammenhänge zwischen den Audit-Trail-Funktionen bzgl. des Engineering-Systems und den Audit-Trail-Funktionen im Hinblick auf das Operator-System (Runtime- bzw. LaufzeitSystem) unberücksichtigt bzw. ignoriert werden, wodurch nicht oder nur sehr ungenau ermittelt werden kann, wie und in welchen zeitlichen Abfolgen Engineering-Daten in die Runtime (in das Operator-System oder das Automatisierungsgerät) überführt worden sind. Ferner können somit keine korrekten Hinweise auf ein inkonsistentes Laden (Laden der Engineering-Daten in das Automatisierungsgerät und/oder die Operator-Station) ermittelt werden.

In der EP 3 306 469 A1 ist ein Verfahren zum Erzeugen einer Equipment Hierarchie, in welcher Prozessobjekte strukturiert hinterlegt sind, offenbart.

Die EP 3 285 162 A1 offenbart ein Verfahren zum Projektieren eines Automatisierungsprojektes, welches eine Automatisierungseinrichtung zum Steuern einer technischen Anlage repräsentiert.

EP3264208 A1 offenbart ein Verfahren für ein Prozessleitsystem zum Aktualisieren von Prozessobjekten eines in einem Engineerings-System hinterlegten Automatisierungsprojektes, wobei mittels des Engineerings-Systems eine Automatisierungseinrichtung zur Steuerung eines technischen Prozesses projektierbar und/oder konfigurierbar ist und wobei ferner mittels eines Operator-Systems der zu steuernde technische Prozess bedien- und beobachtbar ist.

Der Erfindung liegt daher die Aufgabe zugrunde, ein Prozessleitsystem gemäß dem Oberbegriff des Patentanspruchs 1 zu schaffen, mittels der einem Anwender - einem Projekteur und/oder einem Operator - die Beziehungen zwischen engineering-relevanten Aktionen oder Ereignissen und laufzeitrelevanten Aktionen oder Ereignissen bereitgestellt werden. Diese Aufgabe wird durch die im kennzeichnenden Teil des Anspruchs 1 angegebenen Maßnahmen gelöst.

Vorteilhaft ist, dass ein verbessertes Audit-Trail ermöglicht wird. Beispielsweise kann dem Anwender die Beziehung zwischen den Audit-Trail-Einträgen, die die Ladereihenfolge im Engineering-Kontext beschreiben - z. B. Laden der entsprechenden Engineering-Daten zuerst in das Automatisierungsgerät, dann Laden der entsprechenden Engineering-Daten in das Operator System - und den Audit-Trail-Einträgen, die den Zustand des Operator-Systems im Runtime-Kontext beschreiben - z. B. während des Ladens wurde ganz normal bedient und beobachtet oder die Kommunikation mit dem Operator-System war kurzfristig unterbrochen - bereitgestellt werden.

Durch eine "kollektive" Berücksichtigung und die ggf. durch eine Korrelation von laufzeit- und engineering-relevanten Ereignissen sowie ggf. anhand von adäquaten, an das jeweilige Prozessleitsystem und das jeweilige Projekt genau zugeschnittenen, integrierten Korrelationsregeln sowie durch die Archivierung aller Ereignisse in einem gemeinsamen Archiv wird ermöglicht, dass neben der "reinen" Erfassung der Benutzeraktivitäten (wer hat was und wann gemacht) ermittelt werden kann, wie und in welchen zeitlichen Abfolgen die Engineering-Daten in das Operator-System überführt worden sind. Dabei werden insbesondere die Zustände im Operator-System (z. B. während des Ladens wurde ganz "normal" bedient und beobachtet) berücksichtigt. Eine umfassende übergeordnete, in das Prozessleitsystem integrierte Analyse - sowohl zur Laufzeit bzw. zur Runtime (um beispielsweise zeitnah Hinweise auf eine mögliche vorsätzliche oder versehentliche Fehlbedienung zu ermitteln) als auch zu einem späteren Zeitpunkt (z. B. als Basis für die Optimierung der anhand der historischen Ereignisse bzw. Bedienmeldungen rekonstruierten Bedienabläufe) wird ermöglicht.

Durch die Berücksichtigung der Zusammenhänge zwischen Engineering-Daten und Runtime-Daten werden beispielsweise im Engineering-Kontext insbesondere folgende relevante "Bedienmeldungen bzw. -nachrichten" ermöglicht:
- wann wurde welches Gerät mit Änderungen (an Steuerbausteinen) geladen - wie lange waren Inkonsistenzen zwischen Engineering-Daten und Runtime-Daten vorhanden,
- Engineering "Go-Online" - "CFG online schalten" und im Automatisierungsgerät an Bausteine Werte ändern: "Bedienen und Beobachten aus dem Engineering heraus",
- Virtualisierungszustände von Geräten,
- wer hat wann welche Engineering-Version geladen - die Engineering-Version liegt aber in einer anderen Datenbank; es wird jedoch darauf referenziert;

In einer Ausgestaltung der Erfindung gemäß den im Anspruch 2 angegebenen Maßnahmen ist die Laufzeit-Komponente des Engineering-Systems Bestandteil eines Engineering-Servers des Engineering-Systems, wobei das Engineering-System und das Operator-System dazu ausgebildet sind, die in ihren Laufzeit-Komponenten hinterlegten Nachrichten auf ihren jeweiligen Clients anzuzeigen. Dazu weisen die jeweiligen Server und die jeweiligen Clients geeignete in Wirkverbindung stehende Visualisierungskomponenten auf, wodurch grafische Ausgaben von Engineering- und Operator-Nachrichten möglich sind. Jeder Projekteur (Bediener des Engineering-Systems) und jeder Operator (Bediener des Operator-Systems) kann sich die vorgenommenen Änderungen im Engineering und zur Laufzeit (im Operator-System) über die gesamte Historie hinweg anzeigen lassen. Beispielsweise kann der Projekteur prüfen, ob gerade an der Anlage relevante Bedienungen an dem Operator-System vorgenommen werden, um entscheiden zu können, wann es sinnvoll ist, aktualisierte Engineering-Änderungen in die Anlage zu laden. Auch ein Operator kann prüfen, welche relevanten Engineering-Änderungen zuletzt geladen worden sind und inwieweit diese seine Tätigkeit beeinflussen. Ferner können die erwähnten Prüfungen sowie die in Abhängigkeit von deren Ergebnissen anzustoßenden Aktionen - basierend auf den Ergebnissen der über einen längeren Zeitraum durchgeführten Analyse - so umfassend automatisiert werden, dass der jeweilige Benutzer (der Projekteur im Engineering-Kontext bzw. der Operator im Runtime-Kontext) höchstens zuzustimmen hat (z. B. durchs Anklicken eines entsprechenden Buttons), ob eine vorgeschlagene adäquate Aktion ausgeführt werden soll.

Das Engineering-System und das Operator-System weisen jeweils einen Interpreter zum Erkennen der Zustände ihrer jeweiligen Laufzeitkomponenten und/oder zum Erkennen der aktuellen Projektierung auf. Beispielsweise ist dazu auf dem jeweiligen System eine Software-Komponente in Form eines Interpreters (Engineering- und Operator-Nachrichten-Interpreter) vorgesehen, wobei diese ein "ad-hoc Audit Trail" bei der Projektierung und zur Laufzeit bereitstellen. Dieses "ad-hoc Audit Trail" kann einem Projekteur oder einem Operator Hinweise zur aktuellen Projektierung im Engineering oder zum Zustand der Laufzeitkomponenten geben, die ihm bei seiner Tätigkeit Hilfestellung leisten können. Durch eine Korrelation der auf dem Engineering-System und dem Operator-System erfassten und in einem gemeinsamen Archiv zusammengeführten Engineering-Nachrichten und "Operator-Nachrichten können daher "brauchbare" Aussagen für einen Projekteur oder einen Operator abgeleitet werden. Für den Fall, dass z. B. erkannt wird, dass der Ladezustand eines Automatisierungsgerätes zu dem Ladezustand des Operator-Systems inkonsistent ist - weil z. B. ein Baustein bereits in das Automatisierungsgerät geladen, allerdings ein zu diesem Baustein entsprechender Baustein noch nicht in das Operator-System geladen wurde - kann eine "brauchbare" Aussage, die durch Korrelation abgeleitet wird, beispielsweise lauten: "Inkonsistenter Ladezustand zur Laufzeit - neue Messstelle bzw. neuer Steuerbaustein "Motor_xyz" in das Automatisierungsgerät geladen - jedoch diesem Baustein entsprechende Operator-Daten noch nicht im Prozessabbild des Operator-Systems aktualisiert".

Mittels geeigneter projektierbaren Korrelationsregeln für die Interpreter werden die abzuleitenden Aussagen und die dafür verantwortlichen Nachrichten projektspezifisch konfiguriert.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form:
- Figur 1: Bestandteile eines Prozessleitsystems und
- Figuren 2 und 3: Sequenzdiagramme.

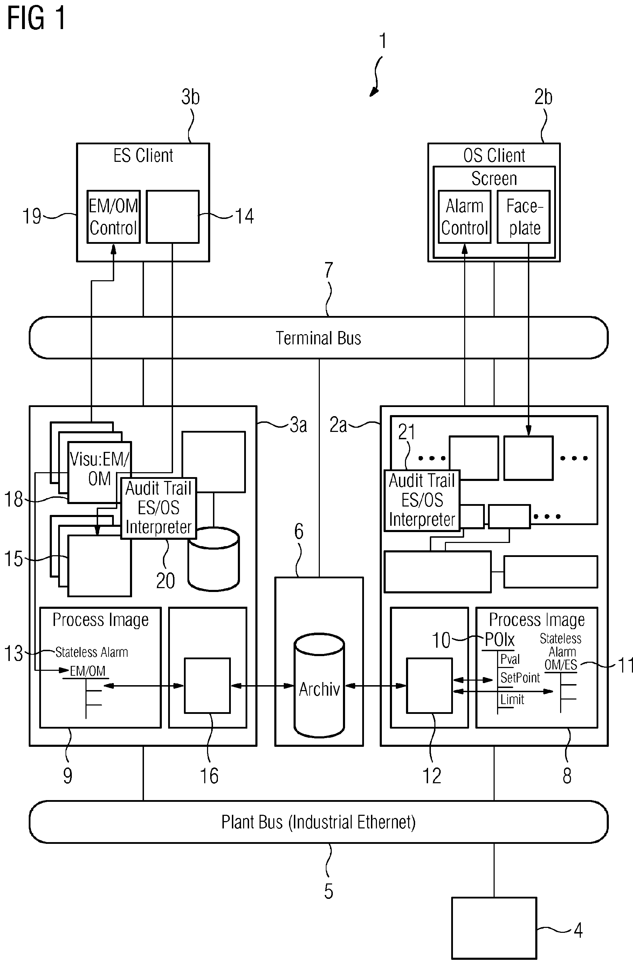

Die in den Figuren 1 bis 3 dargestellten gleichen Teile sind mit gleichen Bezugszeichen versehen.

In Figur 1 sind mit 1 Bestandteile eines Prozessleitsystems bezeichnet, welches im vorliegenden Ausführungsbeispiel ein Operator-System 2a, 2b, ein Engineering-System 3a, 3b, ein Automatisierungsgerät 4 sowie ein Archiv-Server 6 umfasst. Das Prozessleitsystem 1 kann selbstverständlich eine Vielzahl von Automatisierungsgeräten aufweisen, die einerseits über einen Plant-Bus 5 mit einem Operator-Server 2b des Operator-Systems 2a, 2b sowie mit einem Engineering-Server 3a des Engineering-Systems 3a, 3b und andererseits über einen weiteren hier nicht dargestellten Bus mit hier ebenfalls nicht dargestellten dezentralen Peripherien verbunden sind. An diese dezentralen Peripherien sind eine Vielzahl von Feldgeräten (Sensoren, Aktuatoren) angeschlossen. Ferner sind im vorliegenden Beispiel lediglich ein Operator-System 2a, 2b und ein Engineering-System 3a, 3b dargestellt. Selbstverständlich können weitere Operator-Systeme und weitere Engineering-Systeme vorgesehen sein, wobei gewöhnlich jeweils ein Operator-Server und ein Operator-Client ein Operator-System sowie ein Engineering-Server und ein Engineering-Client ein Engineering-System bilden. Im vorliegenden Ausführungsbeispiel weist das Operator-System 2a, 2b den Operator-Server 2a und ein Operator-Client 2b und das Engineering-System 3a, 3b den Engineering-Server 3a und einen Engineering-Client 3b auf, wobei die Server 2a, 3a, die Clients 2b, 3b und der Archiv-Server 6 an einen Terminal-Bus 7 angeschlossen sind.

Das Engineering-System 2a, 2b ist zum Projektieren der Hard- und Software-Komponenten des Prozessleitsystems 1 und das Operator-System zum Bedienen und Beobachten eines technischen Prozesses bzw. einer zu steuernden technischen Anlage vorgesehen, wobei sowohl der Operator-Server 2a als auch der Engineering-Server 3a jeweils eine Laufzeit-Komponente in Form eines Prozessabbildes 8, 9 aufweisen. Diese Prozessabbilder 8, 9 werden im Rahmen der Prozesssteuerung - also zur Laufzeit bzw. im Runtime-Betrieb - aktualisiert. Im Hinblick auf das Prozessabbild 8 des Operator-Servers 2a werden Prozessobjekte bzw. Prozessobjekt-Instanzen 10 im Prozessabbild 8 mit aktuellen Prozesseingangs- und ausgangswerten versorgt, wobei das Automatisierungsgerät 4 diese Werte dem Operator-Server 2a zuführt. Ferner werden zur Laufzeit den Bedieneingaben eines Operators entsprechende Operator-Nachrichten in ein Nachrichten-Objekt 11 des Prozessabbildes 8 des Operator-Servers 2a eingetragen. Mittels einer geeigneten Software-Komponente 12 des Operator-Servers 2a wird ermöglicht, dass der Operator-Server 2a auf den Archiv-Server 6 lesend und schreibend zugreifen kann, um in den Archiv-Server 6 Operator-Nachrichten zu hinterlegen und/oder die dort hinterlegten Operator- und/oder Engineering-Nachrichten des Engineering-Systems 3a, 3b einzulesen.

Das mit dem Prozessabbild 8 des Operator-Servers 2a zeitsynchronisierte Prozessabbild 9 des Engineering-Servers 3a weist ebenfalls ein Nachrichten-Objekt 13 auf, in das Bedien- bzw. Projektierungs-Eingaben entsprechende Engineering-Nachrichten eingetragen werden, wobei im vorliegenden Ausführungsbeispiel mittels Komponenten 14, 15 des Engineering-Servers 3a und des Engineering-Client 3b die Eintragung der Engineering-Nachrichten angedeutet ist. Der Engineering-Server 3a ist ferner ebenfalls mit einer geeigneten Software-Komponente 16 versehen, die es ermöglicht, dass der Engineering-Server 3a auf den Archiv-Server 6 lesend und schreibend zugreifen kann, um in den Archiv-Server 6 Engineering-Nachrichten zu hinterlegen und/oder die dort hinterlegten Engineering- und/oder Operator-Nachrichten des Operator-Systems 2a, 2b einzulesen. Aufgrund dieser gemeinsamen und chronologisch korrekten Archivierung von relevanten Bedien-Eingaben eines Operators und Projektierungs-Eingaben eines Projekteurs wird die Voraussetzung geschaffen, dass sowohl der Projekteur - Benutzer bzw. Bediener des Engineering-Systems 3a, 3b - als auch der Operator - Benutzer bzw. Bediener des Operator-Systems 2a, 2b - sich die vorgenommenen relevanten Änderungen in beiden Systemen zur Laufzeit über die gesamte Historie hinweg anzeigen lassen kann. Um diese relevanten Änderungen bzw. der Engineering- und/oder Operator-Nachrichten grafisch anzuzeigen, weist im vorliegenden Ausführungsbeispiel der Engineering-Server 3a zur grafischen Aufbereitung der Nachrichten eine Visualisierungskomponente 18 und der Engineering-Client 3b eine zu dieser Visualisierungskomponente 18 in Wirkverbindung stehende weitere Visualisierungskomponente 19 auf.

Um ferner im Rahmen der Projektierung und zur Laufzeit ein "ad-hoc Audit Trail" bereitstellen zu können, welches einem Projekteur oder einem Operator Hinweise zur aktuellen Projektierung im Engineering oder Hinweise zum Zustand der Laufzeitkomponenten geben kann, die ihm bei seiner Tätigkeit Hilfestellung leisten können, ist der Engineering-Server 3a und der Operator-Server 2a jeweils mit einem Nachrichten-Interpreter 20, 21 zur Interpretation der Engineering- und der Operator-Nachrichten versehen. Mittels diesen Interpreter 20, 21 werden durch Korrelation der Engineering-Nachrichten und Operator-Nachrichten, die im Archiv-Server 6 zusammengeführt sind, "brauchbare" Aussagen für den Projekteur und/oder den Operator abgeleitet. Eine derartige "brauchbare" Aussage kann beispielweise lauten: "Inkonsistenter Ladezustand zur Laufzeit - neue Messstelle bzw. Prozessobjekt-Instanz (POI) "Motor_xyz" in das Automatisierungsgerät 4 geladen - diese Messstelle ist jedoch noch nicht im Prozessabbild 8 des Operator-Systems 2a, 2b aktualisiert".

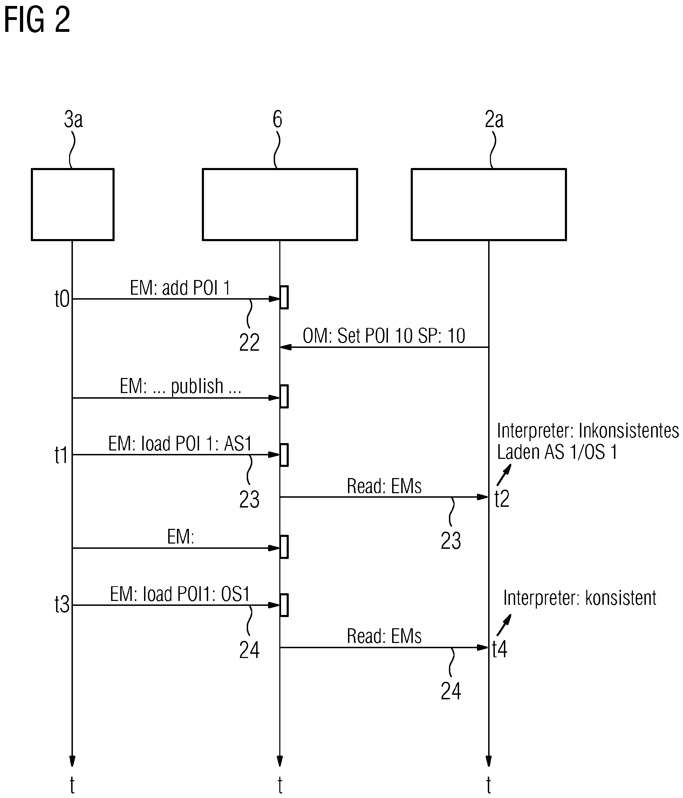

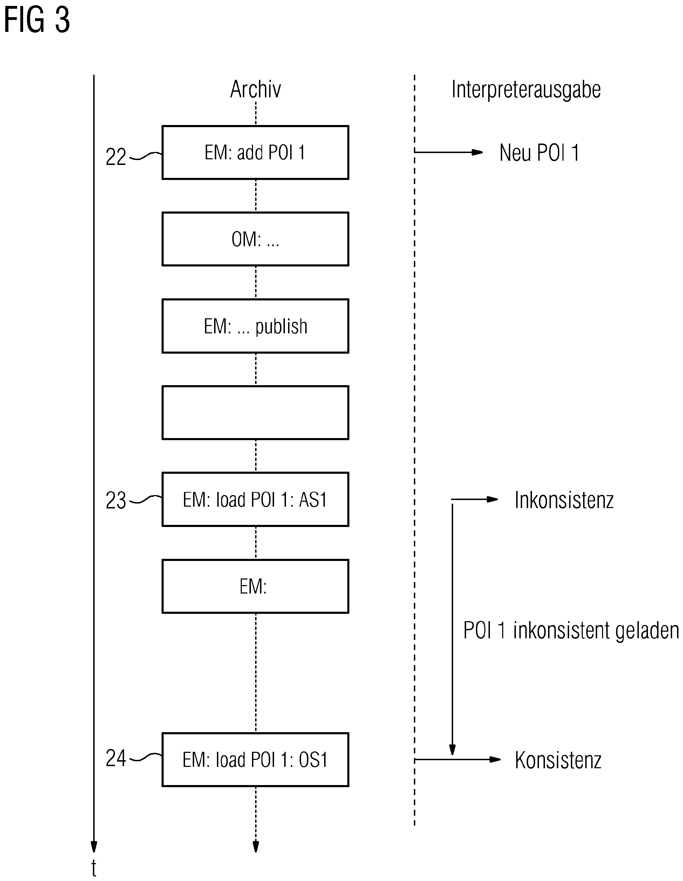

Zur näheren Erläuterung wird dazu auf die Figuren 2 und 3 verwiesen, in welchen Sequenzdiagramme dargestellt sind.

Figur 2 zeigt Schreib- und Lesezugriffe des Operator- und des Engineering-Servers 2a, 3a auf den Archiv-Server 2, und Figur 3 Ausgaben des Nachrichten-Interpreter 21 des Operator-Servers. Es wird angenommen, dass zu einem Zeitpunkt t0 eine Engineering-Nachricht 22 in den Archiv-Server 6 eingetragen wird. Beispielsweise kann diese Nachricht die Information enthalten, dass die Projektierungsdaten geändert wurden und daher eine Prozessobjekt-Instanz (POI), z. B. eine Prozessobjekt-Instanz in Form einer Messstelle, eines Tanks oder Ventils, eines Sensors oder Aktuators, hinzugefügt wurde. Ferner wird angenommen, dass diese Prozessobjekt-Instanz zunächst in das Automatisierungsgerät 4 geladen wurde, wobei eine dazu entsprechende Engineering-Nachricht 23 zu einem Zeitpunkt t1 in den Archiv-Server 6 eingetragen wurde. Zu einem Zeitpunkt t2 liest der Operator-Server 2a die Engineering-Nachricht 23 aus dem Archiv-Server 6 aus, wobei der Nachrichten-Interpreter 21 des Operator-Servers 2a erkennt, dass der Ladezustand des Automatisierungsgerätes 4 zu dem Ladezustand des Operator-Systems 2a, 2b inkonsistent ist.

Für den Fall, dass die Prozessobjekt-Instanz bzw. ein diesem Prozessobjekt entsprechendes Objekt auch in das Operator-System 2a, 2b geladen wird, was das Engineering-System 3a, 3b durch eine Engineering-Nachricht 24 anzeigt, die zu einem Zeitpunkt t3 in den Archiv-Server 6 hinterlegt wird, kann der Nachrichten-Interpreter 21 des Operator-Servers 2a aufgrund der ausgelesenen Engineering-Nachricht 24 zu einem Zeitpunkt t4 erkennen, dass die Ladezustände des Automatisierungsgerätes 4 und des Operator-Systems 2a, 2b zueinander konsistent sind.

Mittels der beschriebenen Maßnahmen wird ein umfassendes, korrelationsfähiges und exaktes Audit-Trail verwirklicht, welches im Wesentlichen gleichermaßen engineering- und laufzeitrelevante Ereignisse kollektiv berücksichtigt und alle Ereignisse in einem gemeinsamen Archiv persistiert. Es können konkrete Hinweise auf Probleme sowie entsprechende adäquate Problemlösungen effizient ermittelt werden. Die Maßnahmen zur Verwirklichung des exakten Audit-Trails einschließlich etwaiger Korrelationsregeln sind in das ohnehin vorhandene Engineering- und Operator-System integriert, so dass kein weiteres System für die Durchführung von Korrelationen erforderlich ist. Durch den Einsatz eines intelligenten zur Interpretation der Engineering und Operator-Nachrichten (Audit-Trail EM/OM- )Interpreters) wird das Risiko einer Fehlbedienung bzw. einer ungeplanten Fehlaktion, die durch eine Fehlentscheidung eines Projekteurs bzw. Operators verursacht wurde, erheblich reduziert. Im Übrigen werden mittels der beschriebenen Maßnahmen die Anforderungen des Industrial Security-Standards IEC 62443 hinsichtlich der Erfassung sämtlicher Benutzeraktivitäten erfüllt, die unter anderem als eine notwendige Voraussetzung für die entsprechenden Zertifizierungen ist, deren Stellenwert stets steigt.

## Patentansprüche

1. Prozessleitsystem mit
- einem Engineering-System (3a, 3b) zum Projektieren der Hard- und Software-Komponenten des Prozessleitsystems (1),
- einem eine Laufzeit-Komponente (8) aufweisendes Operator-System (2a, 2b) zum Bedienen und Beobachten eines technischen Prozesses, und
- einem Archiv-System (6) zum Archivieren von Projektierungs-Eingaben des Engineering-Systems (3a, 3b) und zum Archivieren von Operator-Eingaben im Operator-System (2a, 2b),
**dadurch gekennzeichnet, dass**
- das Engineering-System (3a, 3b) mit einer Laufzeit-Komponente (9) zur Hinterlegung von den Projektierungs-Eingaben entsprechenden Engineering-Nachrichten (22, 23, 24) versehen ist, wobei die Laufzeit-Komponente (9) des Engineering-Systems (3a, 3b) mit der Laufzeit-Komponente (8) des Operator-Systems (2a, 2b) zeitsynchronisiert ist,
- in der Laufzeit-Komponente (8) des Operator-Systems (2a, 2b) den Operator-Eingaben entsprechenden Operator-Nachrichten eingetragen sind, und
- das Engineering-System (3a, 3b) und das Operator-System (2a, 2b) jeweils eine Zugriffs-Komponente (12, 16) aufweisen zum Einschreiben ihrer jeweiligen Nachrichten in das Archiv-System (6) und zum Auslesen der im Archiv-System (6) hinterlegten Engineering- und Operator-Nachrichten,
- und das Engineering-System (3a, 3b) und das Operator-System (2a, 2b) jeweils einen Nachrichten-Interpreter (20, 21) zur Interpretation der Engineering- und der Operator-Nachrichten aufweisen, die jeweils dazu ausgebildet sind auf Basis von Korrelationsregeln durch Korrelation der Engineering-Nachrichten und Operator-Nachrichten, die in dem Archiv-System (6) hinterlegt sind, Aussagen für den Projekteur und/oder den Operator abzuleiten, wobei die auf Basis der Korrelationsregeln abzuleitenden Aussagen und die dafür verantwortlichen Engineering-Nachrichten und Operator-Nachrichten projektspezifisch konfiguriert sind.

2. Prozessleitsystem nach Anspruch 1, **dadurch gekennzeichnet, dass** die Laufzeit-Komponente (9) des Engineering-Systems (3a, 3b) Bestandteil eines Engineering-Servers (3a) des Engineering-Systems (3a, 3b) ist, wobei das Engineering-System (3a, 3b) und das Operator-System (2a, 2b) dazu ausgebildet sind, die in ihren Laufzeit-Komponenten (8, 9) hinterlegten Nachrichten auf ihren jeweiligen Clients (3b, 2b) anzuzeigen.

## Claims

1. Process control system with
- an engineering system (3a, 3b) for the project configuration of the hardware and software components of the process control system (1),
- an operator system (2a, 2b) having a runtime component (8) for the operator control and monitoring of a technical process, and
- an archive system (6) for the archiving of project configuration inputs of the engineering system (3a, 3b) and for the archiving of operator inputs in the operator system (2a, 2b),
**characterised in that**
- the engineering system (3a, 3b) is provided with a runtime component (9) for storing engineering messages (22, 23, 24) corresponding with the project configuration inputs, wherein the runtime component (9) of the engineering system (3a, 3b) is time-synchronised with the runtime component (8) of the operator system (2a, 2b),
- operator messages corresponding with the operator inputs are entered in the runtime component (8) of the operator system (2a, 2b), and
- the engineering system (3a, 3b) and the operator system (2a, 2b) each have an access component (12, 16) for writing their respective messages into the archive system (6) and for reading out the engineering and operator messages stored in the archive system (6),
- and the engineering system (3a, 3b) and the operator system (2a, 2b) each have a message interpreter (20, 21) for interpreting the engineering and the operator messages, which are each embodied, on the basis of correlation rules, to derive statements for the project engineer and/or the operator by way of correlation of the engineering messages and operator messages that are stored in the archive system (6), wherein the statements to be derived on the basis of the correlation rules and the engineering messages and operator messages responsible therefor are configured on a project-specific basis.

2. Process control system according to claim 1, **characterised in that** the runtime component (9) of the engineering system (3a, 3b) is a constituent part of an engineering server (3a) of the engineering system (3a, 3b), wherein the engineering system (3a, 3b) and the operator system (2a, 2b) are embodied to display messages stored in their runtime components (8, 9) on their respective clients (3b, 2b).

## Revendications

1. Système de conduite de processus comprenant
- un système (3a, 3b) d'ingénierie pour établir le projet des composants matériels et logiciels du système (1) de conduite de processus,
- un système (2a, 2b) d'opérateur ayant un composant (8) de temps de marche pour la commande et l'observation d'un processus technique, et
- un système (6) d'archivage pour l'archivage d'entrées d'établissement de projet du système (3a, 3b) d'ingénierie et pour l'archivage d'entrées d'opérateur dans le système (2a, 2b) d'opérateur,
**caractérisé en ce que**
- le système (3a, 3b) d'ingénierie est pourvu d'un composant (9) de temps de marche pour la mise en mémoire des messages (22, 23, 24) d'ingénierie correspondant aux entrées d'établissement de projet, dans lequel le composant (9) de temps de marche du système (3a, 3b) d'ingénierie est synchronisé dans le temps avec le composant (8) de temps de marche du système (2a, 2b) d'opérateur,
- dans le composant (8) de temps de marche du système (2a, 2b) d'opérateur, des messages d'opérateur correspondant aux entrées d'opérateur sont enregistrés,
- le système (3a, 3b) d'ingénierie et le système (2a, 2b) d'opérateur ont chacun un composant (12, 16) d'accès pour écrire leurs messages respectifs dans le système (6) d'archivage et pour lire les messages d'ingénierie et d'opérateur mis dans le système (6) d'archivage,
- et le système (3a, 3b) d'ingénierie et le système (2a, 2b) d'opérateur ont chacun un interprète (20, 21) de message pour l'interprétation des messages d'ingénierie et d'opérateur, qui sont chacun constitués pour déduire, sur la base de règles de corrélation, par corrélation des messages d'ingénierie et des messages d'opérateur, qui sont mis dans le système (6) d'archivage, des prévisions pour celui qui établit les projets et/ou l'opérateur, dans lequel les prévisions à déduire sur la base des règles de corrélation et les messages d'ingénierie responsables à cet effet et les messages d'opérateur sont configurés de manière spécifique à un projet.

2. Système de conduite à un processus suivant la revendication 1, **caractérisé en ce que** le composant (9) de temps de marche du système (3a, 3b) d'ingénierie est une partie constitutive d'un serveur (3a) d'ingénierie du système (3a, 3b) d'ingénierie, dans lequel le système (3a, 3b) d'ingénierie et le système (2a, 2b) d'opérateur sont constitués pour afficher les messages mis dans leurs composants (8, 9) de temps de marche sur leurs clients (3b, 2b) respectifs.
